# EUROPEAN PATENT SPECIFICATION

(11) **EP 4 354 585 B1**
(45) Date of publication and mention of the grant of the patent: **17.12.2025**
(21) Application number: 22897568.6
(22) Date of filing: 02.11.2022
(51) Int. Cl.: H01M 50/24, H01M 10/42

(54) **WATERPROOF ASSEMBLY FOR ENERGY STORAGE DEVICE, AND ENERGY STORAGE DEVICE**
WASSERDICHTE ANORDNUNG FÜR ENERGIESPEICHERVORRICHTUNG UND ENERGIESPEICHERVORRICHTUNG
ENSEMBLE ÉTANCHE À L'EAU POUR DISPOSITIF DE STOCKAGE D'ÉNERGIE, ET DISPOSITIF DE STOCKAGE D'ÉNERGIE

(30) Priority: 25.11.2021 CN 202122918062 U
(43) Date of publication of application: 17.04.2024
(73) Proprietor: Contemporary Amperex Technology (Hong Kong) Limited, Central, Central And Western District (HK)
(72) Inventor: ZHANG, Hua, Ningde, Fujian 352100 (CN); PENG, Haoran, Ningde, Fujian 352100 (CN); LI, Long, Ningde, Fujian 352100 (CN); LIAN, Xiaogang, Ningde, Fujian 352100 (CN); WANG, Zengzhong, Ningde, Fujian 352100 (CN)
(74) Representative: Ran, Handong
(86) International application number: PCT/CN2022/129373
(87) International publication number: WO 2023/093485

(56) References cited:
- CN-A- 113 659 293
- CN-U- 208 596 728
- CN-U- 212 461 896
- CN-U- 212 461 896
- CN-U- 216 529 216
- JP-A- 2001 135 289
- US-A- 3 829 332
- US-A- 5 399 103
- US-A1- 2012 114 998

## Description

### Technical Field

The embodiments of the present application relate to the technical field of energy storage, and in particular to a waterproof assembly of an energy storage device, and an energy storage device.

### Background Art

Since there is a wide market demand for clean energy, energy storage devices are widely used. However, since most production apparatuses for clean energy, such as wind energy, photovoltaic power and tidal energy, are in the wild, the energy storage devices are also usually placed in the open air. On rainy days, rainwater easily enters the energy storage devices, which may damage the function of the energy storage devices or even cause dangerous accidents such as electric leakage. Therefore, how to enhance the rainproof performance of energy storage devices has become an urgent problem to be solved. US2012/114998A1 relates generally to a waterproof battery case comprising a case member, an electrode plate set, and a sealing connector.

### Summary of the Invention

### Technical Problem

In view of the problem regarding the rainproof performance, in the embodiments of the present application, a waterproof assembly of an energy storage device, and an energy storage device are provided, which can improve the rainproof performance of the energy storage device.

### Solutions to Problems

### Technical Solutions

Aspects of the invention are set out in the claims. In the following, each of the described methods, apparatuses, embodiments, examples, and aspects, which do not fully correspond to the invention as defined in the claims is thus not according to the invention and is, as well as the whole following description, present for illustration purposes only or to highlight specific aspects or features of the claims. Embodiments not falling under the scope of the claims should be interpreted as examples useful for understanding the invention. In view of the problem mentioned above, in the embodiments of the present application, a waterproof assembly of an energy storage device, and an energy storage device are provided, which can improve the rainproof performance of the energy storage device.

In a first aspect of the present application, a waterproof assembly of an energy storage device is provided. The waterproof assembly includes a boss and a wire harness cover. The boss is arranged on an outer wall of a case of a battery, and includes a first outward protruding portion that defines a first through hole in communication with the interior of the case. The wire harness cover is configured to be of a hollow cavity structure for receiving a wire harness, and is internally includes a first recess that is configured to accommodate the first outward protruding portion to communicate the first through hole with the hollow cavity.

In an embodiment of the present application, the first outward protruding portion is in interference-fit with the first recess in an axial direction of the boss. The interference-fit connection is simple in structure, has little weakening effect on the strength of the first outward protruding portion and the first recess, and has good impact resistance. Since an outer side wall of the first outward protruding portion is in interference-fit with an inner wall of the first recess, the sealing performance of the wire harness cover to the boss is greatly improved.

The boss includes a first end and a second end. The first end is connected to a side wall of the case. The second end is arranged opposite the first end, and is provided with the first outward protruding portion. A second recess is formed between the first end and the first outward protruding portion, and is configured to accommodate a portion of the wire harness cover when the first outward protruding portion is accommodated in the first recess. According to this solution, the sealing performance of the wire harness cover to the boss can be improved.

The wire harness cover includes a mouth portion, a tail portion and a transition portion. The mouth portion is located at one end of the wire harness cover connected to the boss, and is provided with an opening through which the first outward protruding portion enters the hollow cavity of the wire harness cover. The tail portion is located at the other end of the wire harness cover, and includes a second through hole through which the wire harness enters the hollow cavity of the wire harness cover. The transition portion connects the mouth portion with the tail portion, and the outer diameter of one end of the transition portion connected to the mouth portion is greater than the outer diameter of one end of the transition portion connected to the tail portion. According to this solution, the volume of the tail portion may be reduced, and accordingly, the wire harness cover occupies less volume of the energy storage device, thereby increasing the energy density of the energy storage device.

In an embodiment of the present application, the mouth portion includes an opening section and a connecting section. The opening section is located at one end of the mouth portion connected to the boss. The connecting section is located at the other end of the mouth portion and configured to connect the opening section with the transition portion. The inner diameter of the connecting section is greater than the inner diameter of the opening section, and the opening section, the connecting section and the transition portion jointly form the first recess.

In an embodiment of the present application, the boss further includes a second outward protruding portion. The second outward protruding portion is located in the second recess, and the second outward protruding portion and the first outward protruding portion form a third recess that is configured to accommodate at least a portion of the opening section when the first outward protruding portion is accommodated in the first recess, the at least a portion of the opening section being in interference-fit with the third recess. According to this solution, the sealing performance of the wire harness cover to the boss can be further improved.

In an embodiment of the present application, a portion of the opening section in contact with the second outward protruding portion is provided with a third outward protruding portion extending toward the first end. The second outward protruding portion is provided with a fourth recess matching the third outward protruding portion. According to this solution, the sealing performance of the wire harness cover to the boss can be further improved.

The tail portion includes a bent tail pipe. An inner cavity of the bent tail pipe is in communication with the second through hole. According to this solution, the rainproof performance of the wire harness cover can be enhanced.

In an embodiment of the present application, the material of the wire harness cover includes rubber. According to this solution, the sealing performance of the wire harness cover can be improved.

In a second aspect of the present application, an energy storage device is provided, which includes a battery, a wire harness, and any waterproof assembly provided in the first aspect of the present application. The waterproof assembly is used to implement a waterproof function at a connection between the wire harness and the battery. The energy storage device provided in the second aspect of the present application has a feature of good rainproof effect.

The above description is only an overview of the technical solutions of the present application. In order to more clearly understand the technical means of the present application to implement same according to the contents of the description, and in order to make the above and other objectives, features and advantages of the present application more obvious and understandable, the specific implementations of the present application are exemplarily described below.

### Beneficial Effects of the Invention

### Beneficial Effects

In the waterproof assembly of an energy storage device provided in the first aspect of the present application, a battery case is provided with a boss having an outward protruding portion, and a wire harness cover is internally provided with a recess in which the outward protruding portion can be accommodated. In this way, the wire harness cover can encase the portion connected to the boss, so as to prevent rainwater from directly flowing into the wire harness cover or the battery case, thereby enhancing the rainproof performance of the wire harness cover.

### Brief Description of the Drawings

Various other advantages and benefits will become obvious to those of ordinary skill in the art upon reading the following detailed description of preferred implementations. The accompanying drawings are merely for the purpose of illustrating the preferred implementations, and should not be construed as limiting the present application. Moreover, like components are denoted by like reference signs throughout the accompanying drawings. In the drawings:
FIG. 1 is a schematic structure diagram of an energy storage device according to some embodiments of the present application;
FIG. 2 is a schematic exploded structure view of a battery according to some embodiments of the present application;
FIG. 3 is a schematic exploded structure view of a battery cell according to some embodiments of the present application;
FIG. 4 is a schematic partial view of an energy storage device according to some embodiments of the present application;
FIG. 5 is an enlarged view of region A in FIG. 4;
FIG. 6 is an exploded view of a waterproof assembly according to some embodiments of the present application;
FIG. 7 is a schematic diagram of connection between a single wire harness cover and a battery case according to some embodiments of the present application;
FIG. 8 is a schematic cross-sectional structure view of region C in FIG. 7 in direction B-B;
FIG. 9 is a schematic structure diagram of a boss according to some embodiments of the present application;
FIG. 10 is a schematic cross-sectional structure view of the boss shown in FIG. 9 in plane X-Y;
FIG. 11 is a schematic structure diagram of a wire harness cover according to some embodiments of the present application;
FIG. 12 is a front view of the wire harness cover shown in FIG. 11;
FIG. 13 is a schematic cross-sectional structure view of the wire harness cover shown in FIG. 11 from a top view;
FIG. 14 is a schematic cross-sectional structure view of the wire harness cover shown in FIG. 11 in direction D-D;
FIG. 15 is a schematic partial cross-sectional structure view of a wire harness cover and a boss according to some embodiments of the present application;
FIG. 16 is a schematic partial cross-sectional structure view of another wire harness cover and another boss according to some embodiments of the present application; and
FIG. 17 is a schematic structure diagram of a wire harness cover including a bent tail pipe according to the invention.

### Reference signs in the Detailed Description of Embodiments:

1000 energy storage device; 100 battery, 200 cabinet frame, 300 wire harness; 10 case, 11 first portion, 12 second portion; 20 battery cell, 21 electrode assembly, 22 shell, 23 end cap; 30 wire harness cover, 31 mouth portion, 310 opening, 311 opening section, 312 connecting section, 313 third outward protruding portion, 32 transition portion, 33 tail portion, 331 bent tail pipe, 301 first recess, 302 second through hole; 40 boss, 40a first end, 40b second end, 41 first outward protruding portion, 42 second outward protruding portion, 401 first through hole, 402 second recess, 403 third recess, 404 fourth recess.

### Embodiments of the Invention

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "including" and "having" and any variations thereof in the specification and the claims of the present application as well as the brief description of the drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B may include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the device or element referred to must have a particular orientation or be configured and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be internal communication between two elements or interaction between the two elements. For those of ordinary skill in the art, the specific meanings of the above terms in the embodiments of the present application can be understood according to specific situations.

In the existing energy storage device, when a wire harness is connected to a battery, there is a large gap at the connection between a wire harness cover and a battery case, so that rainwater will directly flow into the wire harness cover or the battery case through the gap. In the present application, the battery case is provided with a boss having an outward protruding portion, and the wire harness cover is internally provided with a recess in which the outward protruding portion can be accommodated. In this way, the wire harness cover can encase the portion connected to the boss, so as to prevent rainwater from directly flowing into the wire harness cover or the battery case.

A waterproof assembly of an energy storage device disclosed in the embodiments of the present application can, but is not limited to, be used in an energy storage device, but can also be used in a battery and in a power consuming device using a battery as a power source. The energy storage device is a device for storing electrical energy, and includes a cabinet frame and a battery. The power consuming device may be, but is not limited to, a mobile phone, a tablet, a notebook computer, an electric toy, an electric tool, a battery cart, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

In the following embodiments, for ease of illustration, an example in which an energy storage device 1000 according to an embodiment of the present application is taken for description.

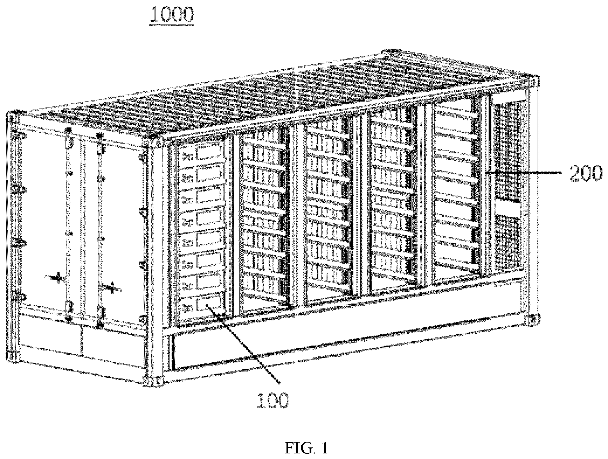

Referring to FIG. 1, FIG. 1 is a schematic structure diagram of an energy storage device 1000 according to some embodiments of the present application. The energy storage device 1000 is internally provided with a battery 100 and a cabinet frame 200. The battery 100 may be arranged on the cabinet frame 200. A plurality of batteries 100 may be stacked from top to bottom between cabinet frames 200.

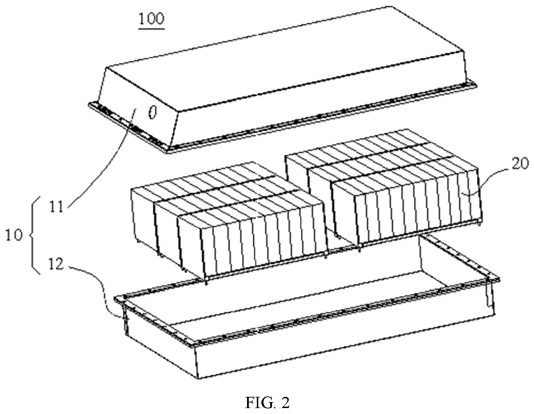

Referring to FIG. 2, FIG. 2 is an exploded view of a battery 100 according to some embodiments of the present application. The battery 100 includes a case 10 and a battery cell 20. The battery cell 20 is accommodated in the case 10. The case 10 is configured to provide an accommodating space for the battery cell 20, and the case 10 may be of various structures. In some embodiments, the case 10 may include a first portion 11 and a second portion 12. The first portion 11 and the second portion 12 are fitted to each other in a covering manner, and the first portion 11 and the second portion 12 jointly define the accommodating space for accommodating the battery cell 20. The second portion 12 may be of a hollow structure with one end open, the first portion 11 may be of a plate-like structure, and the first portion 11 covers an open side of the second portion 12 such that the first portion 11 and the second portion 12 jointly define the accommodating space; and the first portion 11 and the second portion 12 may also each be of a hollow structure with one side open, and the open side of the first portion 11 covers the open side of the second portion 12. Of course, the case 10 formed by the first portion 11 and the second portion 12 may be in various shapes, such as a cylinder and a cuboid.

In the battery 100, a plurality of battery cells 20 may be provided. The plurality of battery cells 20 may be in series connection, in parallel connection, or in parallel-series connection. The parallel-series connection means that some of the plurality of battery cells 20 are connected in series and some are connected in parallel. The plurality of battery cells 20 may be directly connected together in series, or in parallel, or in series-parallel, and then a whole composed of the plurality of battery cells 20 is accommodated in the case 10. Of course, the battery 100 may also be a unit accommodated in the case 10 that is formed by firstly connecting a plurality of battery cells 20 in series or in parallel or in series-parallel to form a plurality of battery modules, and then connecting the plurality of battery modules in series or in parallel or in series-parallel. The battery 100 may further include other structures. For example, the battery 100 may further include a busbar component configured to achieve electrical connections between the multiple battery cells 20.

The battery cell 20 may be a secondary battery or a primary battery, and may be a lithium-sulfur battery, a sodium-ion battery, or a magnesium-ion battery, but is not limited thereto. The battery cell 20 may be in the shape of a cylinder, a flat body, a cuboid, etc.

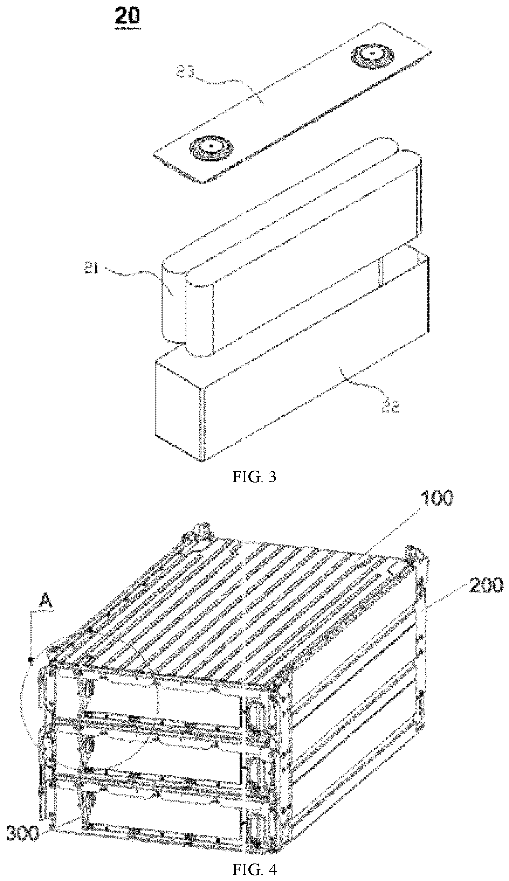

Referring to FIG. 3, FIG. 3 is a schematic exploded view of a battery cell 20 according to some embodiments of the present application. As shown in FIG. 3, the battery cell 20 may include an electrode assembly 21, a shell 22, an end cap 23, and an electrolyte (not shown in the figure). The electrode assembly 21 may include a positive electrode plate, a negative electrode plate, and a separator (none is shown in the figure). The battery cell 20 works primarily by moving metal ions between the positive electrode plate and the negative electrode plate. The positive electrode plate includes a positive current collector and a positive active material layer. A surface of the positive current collector is coated with the positive active material layer. The positive current collector includes a positive current collecting portion coated with the positive active material layer. Taking a lithium-ion battery as an example, the positive current collector may be made of aluminum, and the positive active material layer includes a positive active material which may be lithium cobalt oxides, lithium iron phosphate, ternary lithium, lithium manganate, etc. The negative electrode plate includes a negative current collector and a negative active material layer. A surface of the negative current collector is coated with the negative active material layer. The negative collector includes a negative current collecting portion coated with the negative active material layer. The negative current collector may be made of copper, and the negative active material layer includes a negative active material which may be carbon, silicon, etc. The separator may be made of polypropylene (PP), polyethylene (PE), etc. In addition, the electrode assembly 21 may be of a wound structure or a laminated structure, but the embodiments of the present application are not limited thereto. The shell 22 may have an opening at one end or have openings at both ends. The end cap 23 covers the opening of the shell 22 to form, together with the shell 22, an accommodating space for accommodating the electrode assembly 21 and the electrolyte. Optionally, the shell 22 and the end cap 23 can be made of the same material, for example, the shell 22 and the end cap 23 can be both made of aluminum, so that the shell 22 and the end cap 23 can be welded conveniently. Alternatively, the shell 22 and the end cap 23 can also be made of different materials, for example, the shell 22 and the end cap 23 can be made of different metals, and the shell 22 and the end cap 23 can be connected by riveting or other manners.

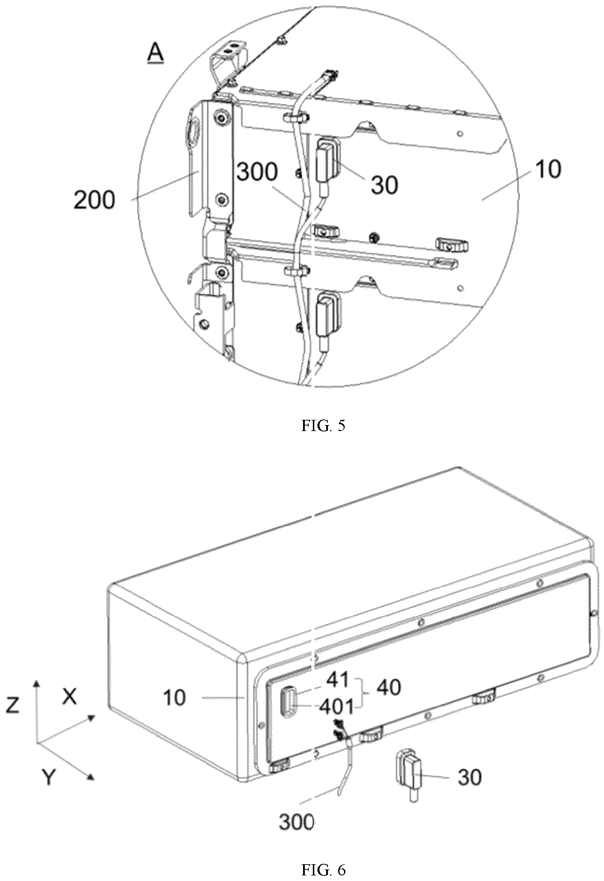

Referring to FIGS. 4 and 5, FIG. 4 is a schematic partial view of an energy storage device 1000 according to some embodiments of the present application, and FIG. 5 is an enlarged view of region A in FIG. 4. As shown in FIG. 4, a plurality of batteries 100 are stacked in a space formed by a plurality of cabinet frames 200, and the plurality of batteries 100 are electrically connected to each other by means of wire harnesses 300. As shown in FIG. 5, a wire harness cover 30 is arranged on a case 10 of a battery, and the wire harness 300 passes through the wire harness cover 30 and is electrically connected to the battery 100 inside the case 10.

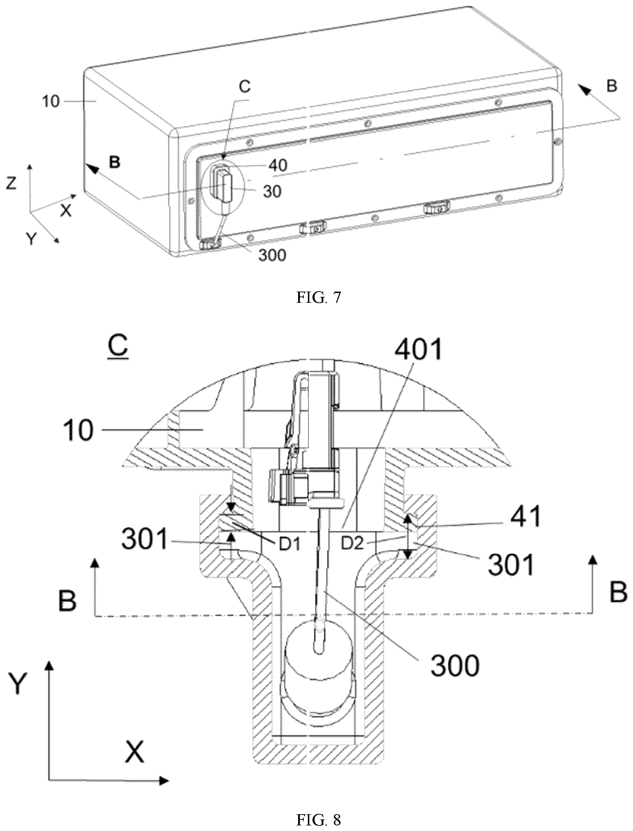

Referring to FIGS. 6 to 8, FIG. 6 is an exploded view of a waterproof assembly according to some embodiments of the present application, FIG. 7 is a schematic diagram of connection between a single wire harness cover 30 and a battery case 10 according to some embodiments of the present application, and FIG. 8 is a schematic cross-sectional structure view of region C in FIG. 7 in direction B-B. According to some embodiments of the present application, the present application provides a waterproof assembly of the energy storage device 1000. The waterproof assembly includes a boss 40 and a wire harness cover 30. The boss 40 is arranged on an outer wall of a case 10 of a battery, the boss 40 includes a first outward protruding portion 41, the first outward protruding portion 41 defines a first through hole 401, and the first through hole 401 is in communication with the interior of the case 10. The wire harness cover 30 is configured as a hollow cavity structure for receiving a wire harness 300, the wire harness cover 30 internally includes a first recess 301, and the first recess 301 is configured to accommodate the first outward protruding portion 41 to communicate the first through hole 401 with the hollow cavity.

The boss 40 is arranged on the outer wall of the case 10 and configured to be connected to the wire harness cover 30. The boss 40 may be made of metal such as iron, magnesium or aluminum, or engineering plastic such as polybutylece terephthalate (PBT). The interior of the boss 40 may be of a hollow pipe structure to facilitate electrical connection between the wire harness 300 and the battery 100 through the hollow pipe of the boss 40. The exterior of the boss 40 may be of a simple geometric structure such as a cuboid, a cylinder, or a sphere, or may be a complex geometric structure composed of a cuboid, a cylinder, a sphere, or other simple geometric structures.

The boss 40 includes a first outward protruding portion 41, the first outward protruding portion 41 may be arranged at an end of the boss 40 opposite to a side wall of the case 10 and extend toward an edge of the case 10 in a radial direction X of the boss 40.

The first outward protruding portion 41 extends around the periphery of the boss 40 and internally defines a first through hole 401. The first through hole 401 may be in communication with the interior of the case 10 so as to allow the wire harness 300 to be electrically connected to the battery 100 through the first through hole 401.

The wire harness cover 30 may be configured to be of a hollow cavity structure for receiving the wire harness 300. The exterior of the wire harness cover 30 may be of a simple geometric structure such as a cuboid, a cylinder or a sphere, or may be a complex geometric structure composed of a cuboid, a cylinder, a sphere or other simple geometric structures. The wire harness cover 30 may be made of metal such as iron, magnesium or aluminum, or engineering plastic such as PBT, or an elastic material such as rubber.

The case 10 is provided with the boss 40 having the first outward protruding portion 41, and the wire harness cover 30 is internally provided with the first recess 301 in which the first outward protruding portion 41 can be accommodated. In this way, the wire harness cover 30 may encase the portion connected to the boss 40 so as to prevent rainwater from directly flowing into the wire harness cover 30 or the case 10, thereby improving the waterproof performance of the energy storage device 1000.

According to some embodiments of the present application, optionally, the first outward protruding portion 41 is in interference-fit with the first recess 301 in an axial direction Y of the boss 40.

The first outward protruding portion 41 is in interference-fit with the first recess 301 in the axial direction Y of the boss 40, that is, the diameter D1 of the outer side wall of the first outward protruding portion 41 in the axial direction is greater than the diameter D2 of the inner side wall of the first recess 301. The interference-fit means that, during a mechanical installation process, when parts need to fit closely together, under the action of the elasticity of material, the first recess 301 expands and deforms to sleeve on the first outward protruding portion 41, and then the first recess 301 is restored and applies a hooping force to the first outward protruding portion 41, so that the first outward protruding portion 41 fits closely with the first recess 301.

The interference-fit connection is simple in structure, has little weakening effect on the strength of the first outward protruding portion 41 and the first recess 301, and has good impact resistance. Since the outer side wall of the first outward protruding portion 41 is in interference-fit with the inner wall of the first recess 301, the sealing performance of the wire harness cover 30 to the boss 40 is greatly improved.

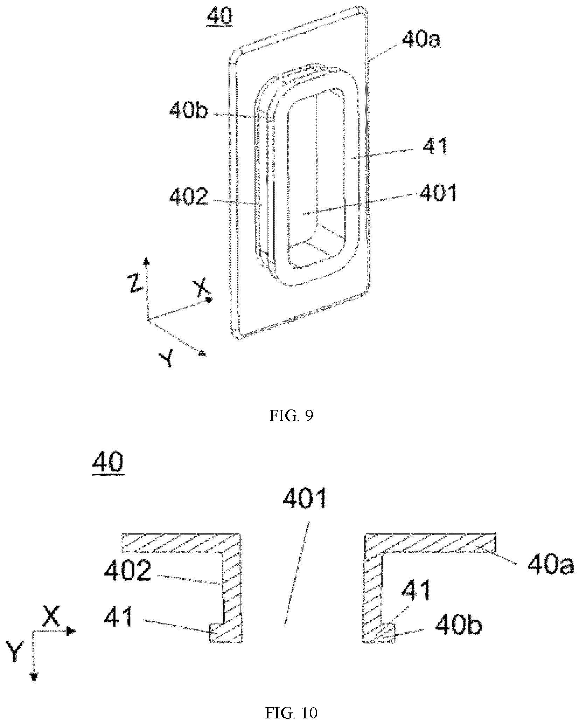

Referring to FIGS. 9 and 10, FIG. 9 is a schematic structure diagram of a boss 40 according to some embodiments of the present application, and FIG. 10 is a schematic cross-sectional structure view of the boss 40 shown in FIG. 9 in plane X-Y. According to some embodiments of the present application, optionally, the boss 40 includes a first end 40a and a second end 40b. The first end 40a is connected to a side wall of the case 10. The second end 40b is arranged opposite the first end 40a, and the second end 40b is provided with the first outward protruding portion 41. A second recess 402 is formed between the first end 40a and the first outward protruding portion 41, and the second recess 402 is configured to accommodate a portion of the wire harness cover 30.

The boss 40 is provided with the second recess 402 to accommodate a portion of the wire harness cover 30 when the first outward protruding portion 41 is accommodated in the first recess 301, so that the sealing performance of the wire harness cover 30 to the boss 40 can be enhanced.

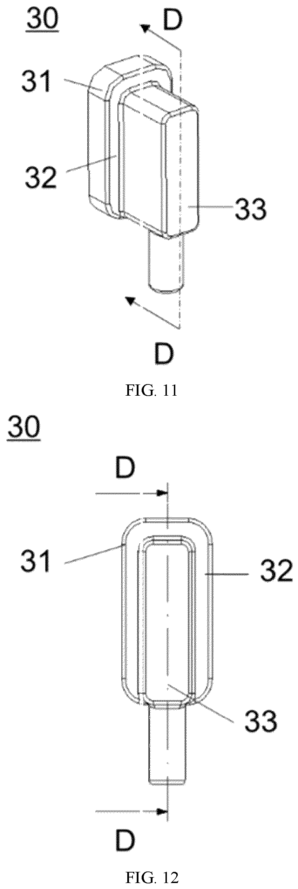

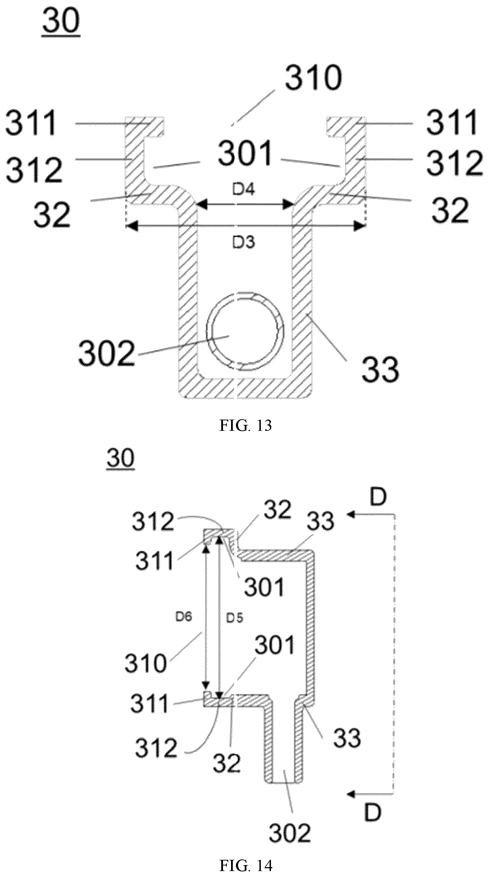

Referring to FIGS. 11 to 14, FIG. 11 is a schematic structure diagram of a wire harness cover 30 according to some embodiments of the present application, FIG. 12 is a front view of the wire harness cover 30 shown in FIG. 11, FIG. 13 is a schematic cross-sectional structure view of the wire harness cover 30 shown in FIG. 11 from a top view, and FIG. 14 is a schematic cross-sectional structure view of the wire harness cover 30 shown in FIG. 11 in direction D-D. According to some embodiments of the present application, optionally, the wire harness cover 30 includes a mouth portion 31, a transition portion 32, and a tail portion 33. The mouth portion 31 is located at one end of the wire harness cover 30 connected to the boss 40, the mouth portion 31 is provided with an opening 310, and the first outward protruding portion 41 enters the hollow cavity of the wire harness cover 30 through the opening 310. The tail portion 33 is located at the other end of the wire harness cover 30, the tail portion 33 includes a second through hole 302, and the wire harness 300 enters the hollow cavity of the wire harness cover 30 through the second through hole 302. The transition portion 32 connects the mouth portion 31 with the tail portion 33, and the outer diameter D3 of one end of the transition portion 32 connected to the mouth portion 31 is greater than the outer diameter D4 of one end of the transition portion 32 connected to the tail portion 33.

The mouth portion 31 is located at one end of the wire harness cover 30 connected to the boss 40 and configured to be connected to the boss 40. The mouth portion 31 may be provided with an opening 310, and the first outward protruding portion 41 enters the hollow cavity of the wire harness cover 30 through the opening 310 and is accommodated in the first recess 301. The mouth portion 31 may be made of engineering plastic such as PBT, or an elastic material such as rubber.

The tail portion 33 is located at the other end of the wire harness cover 30 opposite to the mouth portion 31. The tail portion 33 may include a second through hole 302, and the wire harness 300 may enter the hollow cavity of the wire harness cover 30 through the second through hole 302, and then enter the first through hole 401 through the mouth portion 31 and is connected to the battery 100.

The transition portion 32 is configured to connect the mouth portion 31 with the tail portion 33. As shown in FIG. 13, the outer diameter D3 of one end of the transition portion 32 connected to the mouth portion 31 is greater than the outer diameter D4 of one end of the transition portion 32 connected to the tail portion 33.

The wire harness cover 30 is configured such that the outer diameter D4 of the tail portion 33 is smaller than the outer diameter D3 of the mouth portion 31, so that the volume of the tail portion 33 can be reduced, and accordingly, the wire harness cover 30 occupies less volume of the energy storage device 1000, thereby increasing the energy density of the energy storage device 1000.

Referring to FIGS. 13 and 14, according to some embodiments of the present application, optionally, the mouth portion 31 includes an opening section 311 and a connecting section 312. The opening section 311 is located at one end of the mouth portion 31 connected to the boss 40. The connecting section 32 is located at the other end of the mouth portion 31 and configured to connect the opening section 311 with the transition portion 32. The inner diameter D5 of the connecting section 312 is greater than the inner diameter D6 of the opening section 311, and the opening section 311, the connecting section 312 and the transition portion 32 jointly form the first recess 301.

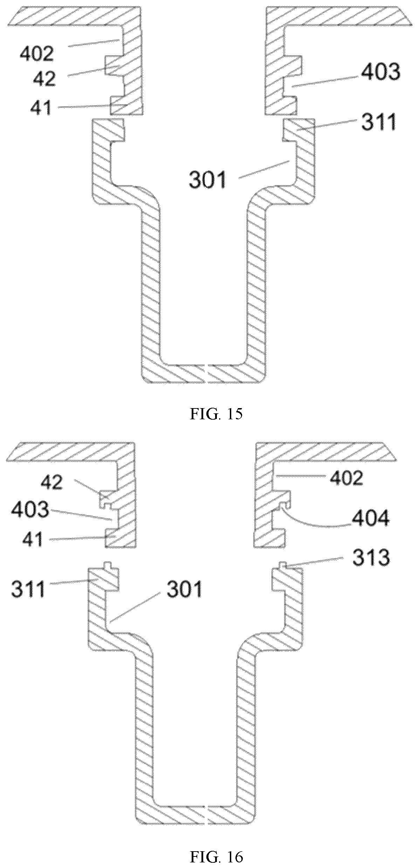

Referring to FIG. 15, FIG. 15 is a schematic partial cross-sectional structure view of a wire harness cover 30 and a boss 40 according to some embodiments of the present application. According to some embodiments of the present application, optionally, the boss 40 further includes a second outward protruding portion 42, the second outward protruding portion 42 is located in the second recess 402, the second outward protruding portion 42 and the first outward protruding portion 41 form a third recess 403, and the third recess 403 is configured to accommodate at least a portion of the opening section 311 when the first outward protruding portion 41 is accommodated in the first recess 301, the at least a portion of the opening section 311 being in interference-fit with the third recess 403.

The boss 40 is additionally provided with the third recess 403, and at least a portion of the opening section 311 is in interference-fit with the third recess 403, so that the sealing performance of the wire harness cover 30 to the boss 40 can be improved.

Referring to FIG. 16, FIG. 16 is a schematic partial cross-sectional structure view of another wire harness cover 30 and another boss 40 according to some embodiments of the present application. Optionally, according to some embodiments of the present application, a portion of the opening section 311 in contact with the second outward protruding portion 42 is provided with a third outward protruding portion 313 extending toward the first end 40a, and the second outward protruding portion 42 is provided with a fourth recess 404 matching the third outward protruding portion 313 in shape.

The boss 40 is additionally provided with the fourth recess 404, and the wire harness cover 30 is provided with the third outward protruding portion 313 matching the fourth recess 404, so that the sealing performance of the wire harness cover 30 to the boss 40 can be improved.

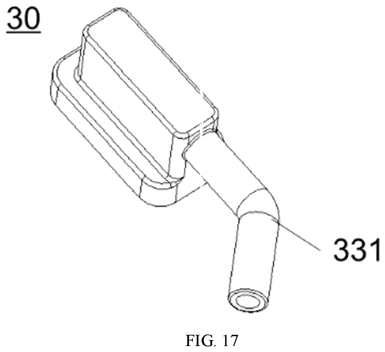

Referring to FIG. 17, FIG. 17 is a schematic structure diagram of a wire harness cover 30 including a bent tail pipe 331 according to some embodiments of the present application. According to some embodiments of the present application, optionally, the tail portion 33 includes a bent tail pipe 331, and an inner cavity of the bent tail pipe 331 is in communication with the second through hole 302.

The bent tail pipe 331 prevents rainwater from directly flowing into the wire harness cover 30 from the second through hole 302, thereby enhancing the rainproof performance of the wire harness cover 30.

According to some embodiments of the present application, optionally, the material of the wire harness cover 30 includes rubber.

Rubber has good elasticity, and the connection between the wire harness cover 30 and the boss 40 can be made of rubber to improve the sealing performance of the wire harness cover 30.

According to some embodiments of the present application, a waterproof assembly of the energy storage device 1000 provided in the present application includes a boss 40 and a wire harness cover 30. The boss 40 includes a first outward protruding portion 41, the first outward protruding portion 41 defines a first through hole 401, and the wire harness cover 30 internally includes a first recess 301. The first outward protruding portion 41 is in interference-fit with the first recess 301 in an axial direction of the boss 40. The boss 40 further includes a second recess 402, a third recess 403, a fourth recess 404, and a second outward protruding portion 42. The wire harness cover 30 includes a mouth portion 31, a transition portion 32 and a tail portion 33. The mouth portion 31 is provided with an opening 310, the mouth portion 31 includes an opening section 311 and a connecting section 312, and the opening section 311 is provided with a third outward protruding portion 313. The tail portion 33 includes a bent tail pipe 331, and an inner cavity of the bent tail pipe 331 forms the second through hole 302. The outer diameter D3 of one end of the transition portion 32 connected to the mouth portion 31 is greater than the outer diameter D4 of one end of the transition portion 32 connected to the tail portion 33. The mouth portion 31 of the wire harness cover 30 is made of rubber, the transition portion 32 and the tail portion 33 are made of PBT, and the boss 40 is made of metal aluminum.

In a second aspect of the present application, an energy storage device 1000 is provided, which includes a battery 100, a wire harness 300, and a waterproof assembly of any of the embodiments provided in the first aspect of the present application. The waterproof assembly is used to implement a waterproof function at the connection between the wire harness 300 and the battery 100.

According to some embodiments of the present application, the energy storage device 1000 provided in the second aspect of the present application has a feature of good rainproof effect.

## Claims

1. A waterproof assembly of an energy storage device (1000), comprising:
a boss (40), which is arranged on an outer wall of a case (10) of a battery (100) and comprises a first outward protruding portion (41) that defines a first through hole (401) in communication with the interior of the case (10); and
a wire harness cover (30), which is configured to be of a hollow cavity structure for receiving a wire harness (300) and is internally provided with a first recess (301) that is configured to accommodate the first outward protruding portion (41) to communicate the first through hole (401) with the hollow cavity;
wherein the boss (40) comprises:
a first end (40a), which is connected to a side wall of the case (10); and
a second end (40b), which is arranged opposite the first end (40a) and is provided with the first outward protruding portion (41);
wherein a second recess (402) is formed between the first end (40a) and the first outward protruding portion (41) and is configured to accommodate a portion of the wire harness cover (30);
wherein the wire harness cover (30) comprises:
a mouth portion (31), which is located at one end of the wire harness cover (30) connected to the boss (40) and is provided with an opening (310) through which the first outward protruding portion (41) enters the hollow cavity of the wire harness cover (30);
a tail portion (33), which is located at the other end of the wire harness cover (30) and comprises a second through hole (302) through which the wire harness (300) enters the hollow cavity of the wire harness cover (30); and
a transition portion (32), which connects the mouth portion (31) with the tail portion (33), the outer diameter of one end of the transition portion (32) connected to the mouth portion (31) being greater than the outer diameter of one end of the transition portion (32) connected to the tail portion (33);
**characterized in that**
the tail portion (33) comprises a bent tail pipe (331), and an inner cavity of the bent tail pipe (331) is in communication with the second through hole (302).

2. The waterproof assembly according to claim 1, wherein the first outward protruding portion (41) is in interference-fit with the first recess (301) in an axial direction of the boss (40).

3. The waterproof assembly according to claim 1, wherein the mouth portion (31) comprises:
an opening section (311), which is located at one end of the mouth portion (31) connected to the boss (40); and
a connecting section (312), which is located at the other end of the mouth portion (31) and configured to connect the opening section (311) with the transition portion (32);
wherein the inner diameter of the connecting section (312) is greater than the inner diameter of the opening section (311); and the opening section (311), the connecting section (312) and the transition portion (32) jointly form the first recess (301).

4. The waterproof assembly according to claim 3, wherein the boss (40) comprises a second outward protruding portion (42) that is located in the second recess (402); and the second outward protruding portion (42) and the first outward protruding portion (41) form a third recess (403) that is configured to accommodate at least a portion of the opening section (311) when the first outward protruding portion (41) is accommodated in the first recess (301), the at least a portion of the opening section (311) being in interference-fit with the third recess (403).

5. The waterproof assembly according to claim 4, wherein a portion of the opening section (311) in contact with the second outward portion is provided with a third outward protruding portion (313) extending toward the first end (40a), and the second outward protruding portion (42) is provided with a fourth recess (404) matching the third outward protruding portion (313).

6. The waterproof assembly according to claim 1, wherein the material of the wire harness cover (30) includes rubber.

7. An energy storage device (1000), comprising:
a battery (100);
a wire harness (300); and
a waterproof assembly of any one of claims 1-6 for implementing a waterproof function at a connection between the wire harness (300) and the battery (100).

## Patentansprüche

1. Wasserfeste Baugruppe einer Energiespeichervorrichtung (1000), umfassend:
einen Ansatz (40), der an einer Außenwand eines Gehäuses (10) einer Batterie (100) angeordnet ist und einen ersten nach außen hervorstehenden Abschnitt (41) umfasst, welcher eine erste Durchgangsöffnung (401) in Verbindung mit dem Inneren des Gehäuses (10) definiert, und
eine Kabelbaumabdeckung (30), die dafür gestaltet ist, eine Hohlraumstruktur zur Aufnahme eines Kabelbaums (300) aufzuweisen, und in ihrem Inneren mit einer ersten Vertiefung (301) versehen ist, die dafür gestaltet ist, den ersten nach außen hervorstehenden Abschnitt (41) unterzubringen, um die erste Durchgangsöffnung (401) mit dem Hohlraum in Verbindung zu bringen,
wobei der Ansatz (40) Folgendes umfasst:
ein erstes Ende (40a), das mit einer Seitenwand des Gehäuses (10) verbunden ist, und
ein zweites Ende (40b), das gegenüber dem ersten Ende (40a) angeordnet und mit dem ersten nach außen hervorstehenden Abschnitt (41) versehen ist,
wobei zwischen dem ersten Ende (40a) und dem ersten nach außen hervorstehenden Abschnitt (41) eine zweite Vertiefung (402) gebildet und dafür gestaltet ist, einen Abschnitt der Kabelbaumabdeckung (30) unterzubringen,
wobei die Kabelbaumabdeckung (30) Folgendes umfasst:
einen Mündungsabschnitt (31), der sich an einem Ende der mit dem Ansatz (40) verbundenen Kabelbaumabdeckung (30) befindet und mit einer Öffnung (310) versehen ist, durch die der erste nach außen hervorstehende Abschnitt (41) in den Hohlraum der Kabelbaumabdeckung (30) eintritt,
einen Endabschnitt (33), der sich an dem anderen Ende der Kabelbaumabdeckung (30) befindet und eine zweite Durchgangsöffnung (302) umfasst, durch die der Kabelbaum (300) in den Hohlraum der Kabelbaumabdeckung (30) eintritt, und
einen Übergangsabschnitt (32), der den Mündungsabschnitt (31) mit dem Endabschnitt (33) verbindet, wobei der Außendurchmesser des einen Endes des Übergangsabschnitts (32), das mit dem Mündungsabschnitt (31) verbunden ist, größer als der Außendurchmesser eines Endes des Übergangsabschnitts (32) ist, der mit dem Endabschnitt (33) verbunden ist,
**dadurch gekennzeichnet, dass** der Endabschnitt (33) eine gebogene Endleitung (331) umfasst und ein inneren Hohlraum der gebogenen Endleitung (331) in Verbindung mit der zweiten Durchgangsöffnung (302) steht.

2. Wasserfeste Baugruppe nach Anspruch 1, wobei sich der erste nach außen hervorstehende Abschnitt (41) in Presspassung mit der ersten Vertiefung (301) in einer axialen Richtung des Ansatzes (40) befindet.

3. Wasserfeste Baugruppe nach Anspruch 1, wobei der Mündungsabschnitt (31) Folgendes umfasst:
einen Öffnungsteilabschnitt (311), der sich an einem Ende des Mündungsabschnitts (31) befindet, das mit dem Ansatz (40) verbunden ist, und
einen Verbindungsteilabschnitt (312), der sich an dem anderen Ende des Mündungsabschnitts (31) befindet und dafür gestaltet ist, den Öffnungsteilabschnitt (311) mit dem Übergangsabschnitt (32) zu verbinden,
wobei der Innendurchmesser des Verbindungsteilabschnitts (312) größer als der Innendurchmesser des Öffnungsteilabschnitts (311) ist und der Öffnungsteilabschnitt (311), der Verbindungsteilabschnitt (312) und der Übergangsabschnitt (32) zusammen die erste Vertiefung (301) bilden.

4. Wasserfeste Baugruppe nach Anspruch 3, wobei der Ansatz (40) einen zweiten nach außen hervorstehenden Abschnitt (42) umfasst, der sich in der zweiten Vertiefung (402) befindet, und der zweite nach außen hervorstehende Abschnitt (42) und der erste nach außen hervorstehende Abschnitt (41) eine dritte Vertiefung (403) bilden, die dafür gestaltet ist, mindestens einen Abschnitt des Öffnungsteilabschnitts (311) unterzubringen, wenn der erste nach außen hervorstehende Abschnitt (41) in der ersten Vertiefung (301) untergebracht ist, wobei sich der mindestens eine Abschnitt des Öffnungsteilabschnitts (311) in Presspassung mit der dritten Vertiefung (403) befindet.

5. Wasserfeste Baugruppe nach Anspruch 4, wobei ein Abschnitt des Öffnungsteilabschnitts (311) in Kontakt mit dem zweiten nach außen hervorstehenden Abschnitt mit einem dritten nach außen hervorstehenden Abschnitt (313) versehen ist, der sich zum ersten Ende (40a) erstreckt, und der zweite nach außen hervorstehende Abschnitt (42) mit einer vierten Vertiefung (404) versehen ist, die mit dem dritten nach außen hervorstehenden Abschnitt (313) zusammenpasst.

6. Wasserfeste Baugruppe nach Anspruch 1, wobei das Material der Kabelbaumabdeckung (30) Kautschuk aufweist.

7. Energiespeichervorrichtung (1000), umfassend:
eine Batterie (100),
einen Kabelbaum (300) und
eine wasserfeste Baugruppe nach einem der Ansprüche 1 bis 6 zum Implementieren einer Wasserfestigkeitsfunktion an einer Verbindung zwischen dem Kabelbaum (300) und der Batterie (100).

## Revendications

1. Ensemble étanche à l'eau d'un dispositif de stockage d'énergie (1000), comportant :
un bossage (40), qui est agencé sur une paroi extérieure d'un boîtier (10) d'une batterie (100) et comporte une première partie faisant saillie vers l'extérieur (41) qui définit un premier trou traversant (401) en communication avec l'intérieur du boîtier (10) ; et
un couvercle de faisceau de câbles (30), qui est configuré pour être une structure de cavité creuse servant à recevoir un faisceau de câbles (300) et est doté à l'intérieur d'un premier évidement (301) qui est configuré pour recevoir la première partie faisant saillie vers l'extérieur (41) afin de faire communiquer le premier trou traversant (401) avec la cavité creuse ;
dans lequel le bossage (40) comporte :
une première extrémité (40a), qui est reliée à une paroi latérale du boîtier (10) ; et
une deuxième extrémité (40b), qui est agencée à l'opposé de la première extrémité (40a) et est dotée de la première partie faisant saillie vers l'extérieur (41) ;
dans lequel un deuxième évidement (402) est formé entre la première extrémité (40a) et la première partie faisant saillie vers l'extérieur (41) et est configuré pour recevoir une partie du couvercle de faisceau de câbles (30) ;
dans lequel le couvercle de faisceau de câbles (30) comporte :
une partie formant embouchure (31), qui est située à une extrémité du couvercle de faisceau de câbles (30) relié au bossage (40) et est dotée d'une ouverture (310) au travers de laquelle la première partie faisant saillie vers l'extérieur (41) pénètre dans la cavité creuse du couvercle de faisceau de câbles (30) ;
une partie arrière (33), qui est située à l'autre extrémité du couvercle de faisceau de câbles (30) et comporte un deuxième trou traversant (302) au travers duquel le faisceau de câbles (300) pénètre dans la cavité creuse du couvercle de faisceau de câbles (30) ; et
une partie de transition (32), qui relie la partie formant embouchure (31) à la partie arrière (33), le diamètre extérieur d'une extrémité de la partie de transition (32) reliée à la partie formant embouchure (31) étant supérieur au diamètre extérieur d'une extrémité de la partie de transition (32) reliée à la partie arrière (33) ;
**caractérisé en ce que** la partie arrière (33) comporte un tuyau arrière coudé (331), et une cavité intérieure du tuyau arrière coudé (331) est en communication avec le deuxième trou traversant (302).

2. Ensemble étanche à l'eau selon la revendication 1, dans lequel la première partie faisant saillie vers l'extérieur (41) est en ajustement serré avec le premier évidement (301) dans une direction axiale du bossage (40).

3. Ensemble étanche à l'eau selon la revendication 1, dans lequel la partie formant embouchure (31) comporte :
une section d'ouverture (311), qui est située à une extrémité de la partie formant embouchure (31) reliée au bossage (40) ; et
une section de raccordement (312), qui est située à l'autre extrémité de la partie formant embouchure (31) et configurée pour relier la section d'ouverture (311) à la partie de transition (32) ;
dans lequel le diamètre intérieur de la section de raccordement (312) est supérieur au diamètre intérieur de la section d'ouverture (311) ; et la section d'ouverture (311), la section de raccordement (312) et la partie de transition (32) forment conjointement le premier évidement (301).

4. Ensemble étanche à l'eau selon la revendication 3, dans lequel le bossage (40) comporte une deuxième partie faisant saillie vers l'extérieur (42) qui est située dans le deuxième évidement (402) ; et la deuxième partie faisant saillie vers l'extérieur (42) et la première partie faisant saillie vers l'extérieur (41) forment un troisième évidement (403) qui est configuré pour recevoir au moins une partie de la section d'ouverture (311) quand la première partie faisant saillie vers l'extérieur (41) est reçue dans le premier évidement (301), ladite au moins une partie de la section d'ouverture (311) est en ajustement serré avec le troisième évidement (403).

5. Ensemble étanche à l'eau selon la revendication 4, dans lequel une partie de la section d'ouverture (311) en contact avec la deuxième partie faisant saillie vers l'extérieur est dotée d'une troisième partie faisant saillie vers l'extérieur (313) s'étendant vers la première extrémité (40a), et la deuxième partie faisant saillie vers l'extérieur (42) est dotée d'un quatrième évidement (404) correspondant à la troisième partie faisant saillie vers l'extérieur (313).

6. Ensemble étanche à l'eau selon la revendication 1, dans lequel le matériau du couvercle de faisceau de câbles (30) comprend du caoutchouc.

7. Dispositif de stockage d'énergie (1000), comportant :
une batterie (100) ;
un faisceau de câbles (300) ; et
un ensemble étanche à l'eau selon l'une quelconque des revendications 1 à 6 servant à mettre en œuvre une fonction d'étanchéité à l'eau au niveau d'une liaison entre le faisceau de câbles (300) et la batterie (100).
